# EUROPEAN PATENT SPECIFICATION

(11) **EP 3 374 980 B1**
(45) Date of publication and mention of the grant of the patent: **24.07.2019**
(21) Application number: 17702553.3
(22) Date of filing: 23.01.2017
(51) Int. Cl.: G08C 17/02

(54) **DATA CONNECTION ASSEMBLY**
DATENVERBINDUNGSANORDNUNG
ENSEMBLE DE CONNEXION DE DONNÉES

(30) Priority: 02.02.2016 EP 16153838
(43) Date of publication of application: 19.09.2018
(73) Proprietor: Siemens Aktiengesellschaft, 80333 München (DE)
(72) Inventor: MOUSSAVINIK, Hessam, 7038 Trondheim (NO)
(86) International application number: PCT/EP2017/051318
(87) International publication number: WO 2017/133915

(56) References cited:
- WO-A1-2015/009805
- US-A1- 2015 270 595

## Description

The present invention relates to a data connection assembly for providing a transmission of communication data through a wall of a housing, for example a housing of a subsea device, and to a device comprising the data connection assembly.

### Background of the invention

In particular in harsh environments housings are used to protect components of a device from these harsh environments. However, in particular electric or electronic devices may need a data communication between the protected components and the outside of the housing. For example, in subsea applications, for example subsea oil production, subsea electrical connectors and penetrators are used to establish a data link communication to and from subsea devices. Usually, an inside pressure of a subsea device is different from the ambient pressure, and an interior of the subsea device is to be separated from an outside by sealing the housing. Similar conditions may be present in other applications, for example in outer space.

For example in case of the subsea device, the inside pressure may correspond essentially to an environmental pressure at sea level of for example one atmosphere and the ambient pressure subsea may be in a range of hundreds of bars, for example 300 bars. Consequently, housings and enclosures of the subsea devices need to be tightly sealed from their ambience and special connectors with correspondingly sealed penetrators are used. However, these penetrators introduce some limitations, for example is the number of communication links limited, and it is required that the exact number of connections needs to be fixed during the design of the subsea device. Furthermore, the physical space needed for the connector at a wall of the housing of the subsea device may be limited, which may furthermore limit the number of communication links or signal ports. Furthermore, electrical contacts penetrating the housing of the subsea device may also introduce signal reflection and signal loss, which may reduce the quality of signals. In addition, depending on the number of signals, there are several cables or fibers needed, which may intensify these problems. Finally, each penetrating electrical or optical contact has to be sealed to prohibit water ingress in subsea environments. Document US2015/0270595 A1 discloses a data connector system comprising waveguides and a dielectric plate. Therefore, there is a need for an improved data link communication to and from devices.

### Summary of the invention

According to the present invention, this object is achieved by a data connection assembly and a device as defined in the independent claims. The dependent claims define preferred and advantageous embodiments of the present invention.

According to the present invention, a data connection assembly for providing a transmission of communication data through a wall of a housing of a device is provided. The device may comprise a subsea device or a device for use in outer space. The data connection assembly comprises a first connector component and a second connector component. The first connector component comprises a first antenna arrangement, a data input and a converter circuitry. The converter circuitry of the first connector component is configured to receive the communication data via the data input, to generate a radio frequency signal comprising the received communication data, and to output the radio frequency signal via the first antenna arrangement. The second connector component comprises a second antenna arrangement, a data output and a converter circuitry. The converter circuitry of the second connector component is configured to receive the radio frequency signal sent from the first antenna arrangement via the second antenna arrangement, to extract the communication data from the received radio frequency signal, and to output the extracted communication data via the data output. The data connection assembly comprises furthermore a dielectric part comprising a dielectric material. The dielectric part is arranged in an opening of the wall of the housing of the device. The opening is extending from a first side of the wall to an opposite second side of the wall. The wall may comprise for example an outer wall of the housing of the device. Consequently, one of the first side and second side may comprise an outer surface of the wall of the housing and the other of the first and second sides may comprise an inside surface of the wall of the housing of the device. The opening in the wall may extend from an inside of the housing to an outside of the housing. The dielectric part within the opening forms a dielectric channel from the inside to the outside of the housing of the device. The data connection assembly comprises furthermore a first connecting element and a second connecting element. The first connecting element is provided on the first side of the wall and configured to mount the first connector component at the first side of the wall. The second connecting element is provided on the second side of the wall and configured to mount the second connector component at the second side of the wall. Preferably, the first and second connecting elements are provided near the opening of the wall such that the first connector component and the second connector component can be mounted near the opening in the wall.

The above-defined data connection assembly enables to provide a data link communication wirelessly via radio frequency signals. As the metal material of a usual housing of a device may significantly attenuate or disturb radio frequency signals, an opening filled with dielectric material is provided in a wall of the housing. The dielectric part may ensure the tightness of the housing by sealing the opening. At the same time, the dielectric part enables transmission of the radio frequency signal from the first connector component to the second connector component through the wall of the housing of the device. Thus, a conventional penetrator connection which is installed in the housing of a device may be replaced by the dielectric part that is suitable for radio frequency transmission. Thus, the dielectric part provides a radio frequency channel through the wall of the housing of the device. The first and second connector components can be mounted at positions near the opening of the wall by using the first and second connecting elements, which are provided at both sides of the wall. The converter circuitries in the first and second connector components may provide a transparent media conversion such that it is not dependent on the protocol used for data communication. For example, if there is a specific number of signals needed, instead of a specific number of separate penetrators, now these signals, for example digital signals, may be converted by the converter circuitry into a single radio frequency signal, for example by modulation and multiplexing. The radio frequency transmission may satisfy real-time requirements of data transmission such that no signal is blocked in time by other signals. The first and second antenna arrangements may comprise, for example, wire aerials or on-chip antennas like they are used in e.g. RFID systems.

According to an embodiment, the dielectric part seals the opening. For example, the dielectric part may be mounted within the opening via fusion welding. Additionally or as an alternative, the opening may comprise an internal thread and the dielectric part may comprise a matching external thread. The dielectric part may be screwed into the opening. Additionally, a sealing means may be applied to the threads of the opening and the dielectric part assuring a watertight connection between the dielectric part and the wall of the housing of the device.

According to another embodiment, the dielectric material may comprise for example glass, doped glass or carbon or a combination thereof. Additionally, the dielectric part may comprise a waveguide structure, for example one or more tubular elements of a metal material embedded in the dielectric material. Thus, a wave-guiding channel may be formed within the dielectric part from the first side of the wall to the second side of the wall.

According to another embodiment, a frequency of the radio frequency signal is in a range from 3.1 to 11.6 GHz. This frequency range, which is also called ultra-wide bandwidth (UWB), provides a large transmission bandwidth for digital signals. Additionally or as an alternative, the radio frequency signal may comprise a Bluetooth radio signal. The communication data may comprise any kind of proprietary or standardized digital or analogue information. For example, the data input and/or the data output of the first and second connector components may comprise for example an Ethernet port, an optical fiber port, a digital electrical port and/or an analog electrical port. It is to be noted that the data input and data output of the first and second connector components may comprise a plurality of the above-mentioned ports.

According to an embodiment, the first connecting element comprises a first receptacle, and the first connector component comprises a mounting structure which is matching to the first receptacle. This enables the first connector component to be mounted at the first side of the wall by for example plugging the first connector component into the first receptacle. Likewise, the second connecting element may comprise a second receptacle, and the second connector component may comprise a mounting structure which matches the second receptacle for mounting the second connector component at the second side of the wall. The first and second receptacles may comprise for example a threaded part into which a corresponding threaded part of the first and second connector components may be screwed. Furthermore, the first and second receptacles may comprise a latching mechanism or a click mechanism for receiving corresponding mounting structures of the first and second connector components for mounting the first and second connector components at the first and second sides of the wall.

According to another embodiment, at least one of the first and second connector components comprises a housing comprising a metal material. The combination of the metal material of the housing of the corresponding first and/or second connectors and the metal material of the wall of the housing around the opening with the dielectric part enables a shielding against external radio frequency signals which may disturb operation of the converter circuitry or the radio frequency signal transmitted between the first and second connector components through the dielectric part. Furthermore, the housing of metal material may protect the internal components of the first and second connector components against environmental impacts, for example aggressive seawater, high subsea pressure, vacuum and radiation in outer space, and may provide an internal pressure of 1 atm.

According to another embodiment, at least one of the first and second connector components comprises a housing including a housing surface facing the dielectric part. The housing surface comprises the same dielectric material as the dielectric part. When the first and second connector components are arranged at the wall of the device, the housing surfaces may face the dielectric part from both sides, the first side and the second side. As the housing surfaces comprise the same dielectric material as the dielectric part, a homogeneous dielectric area may be provided between the first and second antenna arrangements of the first and second connector components such that a reliable and powerful radio frequency transmission may be provided and reflections due to transitions of different dielectric materials may be avoided.

According to another embodiment, one of the first and second connector components comprises a power input and a power transmission coil which provides an inductive power transmission of electrical power received from the power input. The other of the first and second connector components comprises a power transmission coil which is configured to receive the inductive power transmission and to provide electrical energy to the converter circuitry and further electronic circuitry (e.g. amplifiers, transceivers) of the other of the first and second connector components. For example, the first connector component may be arranged inside the device at the wall and the second connector component may be arranged at an outside of the device at the wall. The first connector component may comprise a power input to receive electrical power which may be present inside the device for supplying further components within the device with electrical power. Via the power input, the electrical power is fed to the power transmission coil and via the inductive power transmission, the electrical power is transmitted to the power transmission coil arranged in the second connector component. The inductive power transmission through the wall of the device is enabled by the dielectric part. In the second connector component, the electrical power is received at the power transmission coil and provided to the converter circuitry and further electronic circuitry of the second connector component. Thus, the second connector component does not need a power input or power supply for supplying the converter circuitry with electrical energy. As an option, a backup rechargeable battery may be provided within the second connector component which is charged by electrical energy received via the power transmission coil and which supplies electrical energy to the converter circuitry and further electronic circuitry of the second connector component. Additionally or as an alternative, the second connector component may comprise a power input for providing electrical energy to the converter circuitry of the second connector component.

According to another aspect of the present invention, a device is provided which comprises a sealed housing for accommodating components of the device, and the above described data connection assembly. The data connection assembly is arranged at a wall of the sealed housing. This enables a variable number of communication links to be established through the wall of the device without penetrating electrical connectors or penetrating optical fibers. Thus, a variable design of the components within the device is accomplished and a high reliability with respect to environmental impacts can be reached.

Although specific features are described in the above summary and the following detailed description in connection with specific embodiments and aspects, it is to be understood that the features of the embodiments and the aspects may be combined with each other unless specifically noted otherwise. In particular, the second connector component may comprise additionally a data input or a bidirectional data port and the converter circuitry of the second connector component may additionally be configured to receive communication data via the data input, to generate a radio frequency signal comprising the received communication data and to output the radio frequency signal via the second antenna arrangement. Consequently, the first connector component may comprise a data output or a bidirectional data port, and the converter circuitry of the first connector component may be configured to receive via the first antenna arrangement the radio frequency signals sent from the second antenna arrangement, to extract communication data from the received radio frequency signal and to output the communication data via the data output. Thus, a bidirectional communication via the data connection assembly can be provided through the dielectric part provided in the wall of the housing of the device. The bidirectional communication may comprise for example a half duplex or full duplex transmission scheme.

### Brief description of the drawings

The present invention will now be described in more detail with reference to the accompanying drawings.
Fig. 1 shows schematically a device according to an embodiment of the present invention.
Fig. 2 shows schematically a data connection assembly according to an embodiment of the present invention.
Fig. 3 shows schematically a front view of a wall of a housing of a device comprising a dielectric part and connecting element according to an embodiment of the present invention.
Fig. 4 shows schematically a perspective view of a connector component according to an embodiment of the present invention.

### Detailed description of the drawings

In the following, exemplary embodiments of the invention will be described in more detail. It is to be understood that the features of the various exemplary embodiments described herein may be combined with each other unless specifically noted otherwise. Same reference signs in the various drawings refer to similar or identical components.

Furthermore, in the following detailed description, a data connection assembly will be described in connection with a subsea device. However, the present invention is not restricted to the field of subsea applications, but may be used in any other technical field, for example outer space applications.

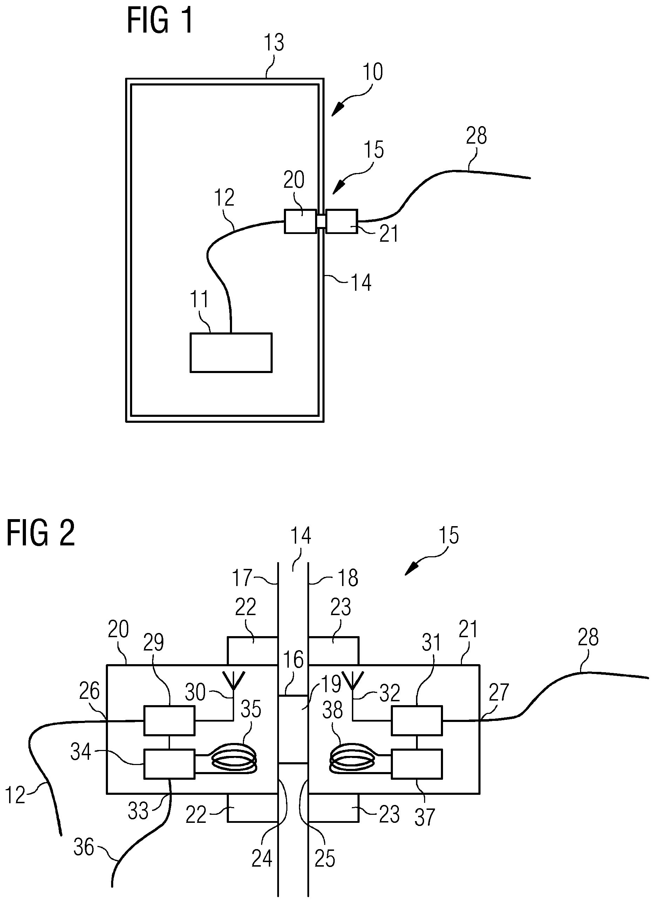

Fig. 1 shows a device 10, for example a subsea pressure canister, which may be arranged in a subsea environment for housing electrical components 11. For communicating with other components arranged in other subsea devices, the components 11 of the subsea device 10 may comprise a data communication link 12. The data communication link 12 may comprise for example one or more optical fibers, an Ethernet cable, or one or more dedicated electrical analogue or digital links. The subsea device 10 may be arranged and operated in deep-sea environments, for example in a depth of up to 3000 m. Therefore, the subsea device 10 may comprise a housing 13, which protects the interior of the housing 13 from the high pressure in the environment of the housing 13 in deep-sea applications. For example, the housing 13 may comprise a so-called pressure canister providing a pressure of approximately one atmosphere in the inside of the housing 13 independent from external pressure conditions. For avoiding penetrators passing through the housing 13, for example electrical connectors or optical fibers penetrating the walls of the housing 13, a data connection assembly 15 is arranged at a wall 14 of the housing 13. By avoiding penetrators through the wall 14, the risk of water ingress into the interior of the housing 13 may be reduced in deep-sea applications.

Fig. 2 shows the data connection assembly 15 of Fig. 1 in more detail. The wall 14 is shown partially in Fig. 2. The wall 14 is provided with a hole or opening 16 extending from a first inner side 17 of the wall 14 to a second outside side 18 of the wall 14. Within the opening 16, a dielectric part 19 is arranged. The dielectric part 19 comprises a dielectric material, for example glass, doped glass or carbon. The dielectric part may comprise additionally a (not shown) waveguide structure, for example a metal tube extending from the first side 17 to the second side 18 embedded in the dielectric part 19. Thus, the dielectric part 19 forms a radio frequency channel through which a radio frequency signal may be transmitted from the first side 17 to the second side 18 or in the opposite direction.

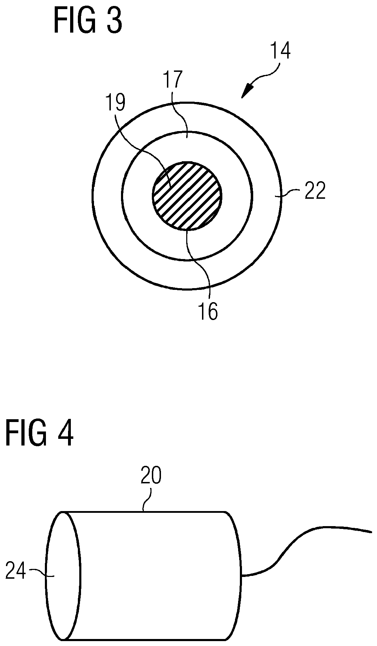

At the inner side 17 of the wall 14, a first connecting element 22 is provided configured to mount a first connector component 20 at the inner side 17 of the wall 14. For example, the first connecting element 22 comprises a receptacle 22 for receiving the first connector component 20. The receptacle 22 may have a circular shape as shown in Fig. 3. A housing of the first connector component 20 may have a cylindrical shape which may be fitted into the receptacle 22 as shown in figures 3 and 4. The receptacle 22 may provide an inner thread and the first connector component 20 may provide an outer thread such that the first connector component 20 may be screwed into the receptacle 22. As an alternative, the receptacle 22 may comprise a latching mechanism for receiving and fixing the first connector component 20 when the first connector component 20 is inserted into the receptacle 22. The first connecting element 22, for example the receptacle 22, may be arranged at the inner side 17 of the wall 14 such that it encircles the opening 16, as shown in Fig. 3. Thus, when the first connector component 20 is inserted into the first connecting element 22, a front surface or head 24 of the first connector component 20 (see Fig. 4) is facing at least partially the dielectric part 19. The front surface 24 of the first connector component 20 may comprise the same dielectric material as the dielectric part 19. In an assembled state of the data connection assembly 15, the front surface 24 of the first connector component 20 may be in contact with the dielectric part 19.

At the outer side 18 of the wall 14, a second connecting element 23 is provided which is configured to mount a second connector component 21 at the outer side 18 of the wall 14. The second connecting element 23 may have a comparable structure as the first connecting element 22. Likewise, the second connector component 21 may comprise a housing having a comparable form as the first connector component 20. However, the second connecting element 23 and the second connector component 21 may have a design which differs from the first connecting element 22 and the first connector component 20 to provide a high resistance against environmental influences occurring in subsea conditions at the outside of the subsea device 10. A front surface 25 of the housing of the second connector component 21 may also comprise the same dielectric material as the dielectric part 19, and the front surface 25 may be in contact with the dielectric part 19 in an assembled state of the data connection assembly 15 when the second connector component 21 is engaged with the second connecting element 23.

The first connector component 20 comprises a data input 26, a converter circuitry 29 and an antenna arrangement 30. The data input 26 may be coupled to the data communication link 12 coupling the first connector component 20 to the components 11 of the subsea device 10. The second connector component 21 comprises a second antenna arrangement 32, a data output 27 and a converter circuitry 31. The data output 27 may be coupled to a subsea datalink cable 28.

Data received from the data communication link 12 via the data input 26 is converted by the converter circuitry 29 to a radio frequency signal which is transmitted via the antenna arrangement 30. The radio signal from the antenna arrangement 30 is passing through the dielectric part 19 within the hole 16 of the wall 14 to the second antenna arrangement 32, where it is received, and the received antenna signal is converted by the converter circuitry 31 of the second connector component 21 into a data signal which is output at the output 27. In other words, data to be transmitted from the components 11 of the subsea device 10 to an outside of the subsea device 10 are transmitted via the data communication link 12 to the first connector component 20 and there, the data is wirelessly transmitted through the dielectric part 19 to the second connector component 21, where it is extracted from the radio signal and output via the data output 27. Thus, a conventional penetrator connection that is installed in the wall 14 of the housing 13 of the subsea device 10 is replaced by the dielectric part 19 that is suitable for radio frequency transmissions. The dielectric part 19 forms a radio frequency channel.

It is to be understood that a data transmission in the opposite direction, i.e. from outside of the subsea device 10 to the components 11 inside of the subsea device 10, may be accomplished in the same way, for example by a further pair of converter circuitries and antenna arrangements in the first and second connector components 20, 21, or by a bidirectional radio frequency transmission accomplished by the first and second antenna arrangements 30, 32 and the converter circuitries 29, 31. Accordingly, the data input 26 and the data output 27 may additionally serve as bidirectional ports.

The data communication link 12 may use standard protocols, for example Ethernet, and the physical datalink, which has a connector head at each end, may comprise a single fiber optic or an Ethernet cable. The conversion performed in the converter circuitries 29, 31 may pack and unpack data to and from the radio frequency signal. The media conversion may be transparent such that it is not dependent on the protocol used for data communication. Furthermore, a plurality of signals may be combined by the converter circuitry 29 and may be transmitted within the radio signal. The radio signal may be based on a high-speed short-range wireless communication, for example frequencies of the so-called ultra-wide bandwidth signaling or Bluetooth.

For providing electrical energy to the converter circuitries 29 and 31, each connector component 20, 21 may comprise additionally a power supply input. However, to avoid feeding power to the second connector component 21, which may be arranged outside the subsea device 10 in harsh subsea environment, an inductive power supply may be established as will be explained below.

The first connector component 20 comprises a power input 33 to which a power supply cable 36 is connected. The power supply cable 36 provides electrical energy, which may be present within the subsea device 10 from, for example, a battery or a not shown power supply connector. Electrical energy received via the power input 33 is fed into a power transmission coil 35, which is arranged within the first connector component 20. Additionally, a power conversion circuit 34 may be provided in the first connector component 20 to form a suitable alternating current for an inductive power transmission via the power transmission coil 35. Furthermore, electrical power input via the power input 33 may be fed directly or indirectly via the power conversion circuit 34 to the converter circuitry 29 for supplying the converter circuitry 29 with electrical energy.

The inductive power transmission induced by the first power transmission coil 35 is received through the dielectric part 19 at a second power transmission coil 38 arranged within the second connector component 21. The second power transmission coil 38 is coupled to a power conversion circuit 37 of the second connector component 21 which generates a suitable electrical power from the received inductive power transmission to supply the converter circuitry 31 with electrical energy. Additionally, for buffering electrical energy, the second connector component 21 may comprise a (not shown) rechargeable battery which is supplied with electrical energy from the power conversion circuit 37 and which provides electrical energy to the converter circuitry 31.

To sum up, the use of a dielectric material as a radio frequency channel that is implanted in the housing of the subsea device 10 enables to use a reliable wireless communication instead of penetrators. A transparent media conversion of the data to be transmitted enables a use in any data communication link. The inductive power supply enables that at least one of the first and second connector components 20, 21 does not need a power supply cable, such that in particular that connector component which is arranged outside the subsea device 10 does not need an external power supply.

### List of reference signs

- 10: device
- 11: component
- 12: data communication link
- 13: housing
- 14: wall
- 15: data connection assembly
- 16: opening
- 17: first side of the wall
- 18: second side of the wall
- 19: dielectric part
- 20: first connector component
- 21: second connector component
- 22: first connecting element
- 23: second connecting element
- 24: front surface
- 25: front surface
- 26: data input
- 27: data output
- 28: datalink cable
- 29: converter circuitry
- 30: first antenna arrangement
- 31: converter circuitry
- 32: second antenna arrangement
- 33: power input
- 34: power conversion circuit
- 35: power transmission coil
- 36: power supply cable
- 37: power conversion circuit
- 38: power transmission coil

## Claims

1. A data connection assembly for providing a transmission of communication data through a wall (14) of a housing (13) of a device (10), the data connection assembly (15) comprising:
- a first connector component (20) comprising a first antenna arrangement (30), a data input (26) and a converter circuitry (29), the converter circuitry (29) of the first connector component (20) being configured to receive the communication data via the data input (26), to generate a radio frequency signal comprising the received communication data, and to output the radio frequency signal via the first antenna arrangement (30),
- a second connector component (21) comprising a second antenna arrangement (32), a data output (27) and a converter circuitry (31), the converter circuitry (31) of the second connector component (21) being configured to receive via the second antenna arrangement (32) the radio frequency signal sent from the first antenna arrangement (30), to extract the communication data from the received radio frequency signal, and to output the communication data via the data output (27),
- a dielectric part (19) comprising a dielectric material, **characterized by** the dielectric part (19) being arranged in an opening (16) of the wall (14) of the housing (13), the opening (16) extending from a first side (17) of the wall (14) to an opposite second side (18) of the wall (14),
- a first connecting element (22) provided on the first side (17) of the wall (14) configured to mount the first connector component (20) at the first side (17) of the wall (14), and
- a second connecting element (23) provided on the second side (18) of the wall (14) configured to mount the second connector component (21) at the second side (18) of the wall (14),
wherein the dielectric part (19) is mounted within the opening (16) via fusion welding or
the opening (16) comprises an internal thread and the dielectric part (19) comprises a matching external thread.

2. The data connection assembly according to claim 1, wherein the dielectric part (19) is adapted to seal the opening (16).

3. The data connection assembly according to claim 1 or claim 2, wherein the dielectric material comprises at least one of:
- glass,
- doped glass, and
- carbon.

4. The data connection assembly according to any one of the preceding claims,
wherein the first connecting element (22) comprises a first receptacle, and the first connector component (20) comprises a mounting structure matching to the first receptacle for mounting the first connector component (20) at the first side (17) of the wall (14), and/or
wherein the second connecting element (23) comprises a second receptacle, and the second connector component (21) comprises a mounting structure matching to the second receptacle for mounting the second connector component (21) at the second side (18) of the wall (14).

5. The data connection assembly according to any one of the preceding claims,
wherein one (20) of the first and second connector components (20, 21) comprises a power input (33) and a power transmission coil (35) providing an inductive power transmission of electrical power received from the power input (33), and wherein the other (21) of the first and second connector components (20, 21) comprises a power transmission coil (38) configured to receive the inductive power transmission and to provide electrical energy to the converter circuitry (31) of the other (21) of the first and second connector components (20, 21).

6. The data connection assembly according to any one of the preceding claims, wherein a frequency of the radio frequency signal is in a range from 3.1 - 10.6 GHz.

7. The data connection assembly according to any one of the preceding claims, wherein at least one of the first and second connector components (20, 21) comprises a housing including a surface (24, 25) facing the dielectric part (19), wherein the surface (24, 25) comprises the same dielectric material as the dielectric part (19).

8. The data connection assembly according to any one of the preceding claims, wherein at least one of the data input (26) and the data output (27) comprises at least one of:
- an Ethernet port,
- an optical fiber port,
- a digital electrical port, and
- an analog electrical port.

9. The data connection assembly according to any one of the preceding claims, wherein at least one of the first and second connector components (20, 21) comprises a housing comprising a metal material.

10. The data connection assembly according to any one of the preceding claims, wherein the dielectric part (19) comprises a wave guide structure.

11. A device comprising:
- a sealed housing (13) for accommodating components (11) of the device (10), and
- the data connection assembly (15) according to any one of the preceding claims arranged at a wall (14) of the sealed housing (13).

12. The device according to claim 11, wherein the device (10) comprises a watertight subsea device.

## Patentansprüche

1. Datenverbindungsanordnung zum Vorsehen einer Übertragung von Kommunikationsdaten durch eine Wand (14) eines Gehäuses (13) einer Einrichtung (10), wobei die Datenverbindungsanordnung (15) Folgendes umfasst:
- eine erste Verbinderkomponente (20), die eine erste Antennenanordnung (30), einen Dateneingang (26) und eine Wandlerschaltung (29) aufweist, wobei die Wandlerschaltung (29) der ersten Verbinderkomponente (20) zum Empfangen der Kommunikationsdaten über den Dateneingang (26) ausgebildet ist, um ein Hochfrequenzsignal zu erzeugen, das die empfangenen Kommunikationsdaten umfasst, und um das Hochfrequenzsignal über die erste Antennenanordnung (30) auszugeben,
eine zweite Verbinderkomponente (21), die eine zweite Antennenanordnung (32), einen Datenausgang (27) und eine Wandlerschaltung (31) aufweist, wobei die Wandlerschaltung (31) der zweiten Verbinderkomponente (21) zum Empfangen des von der ersten Antennenanordnung (30) gesendeten Hochfrequenzsignals über die zweite Antennenanordnung (32) ausgebildet ist, um die Kommunikationsdaten aus dem empfangenen Hochfrequenzsignal zu extrahieren und um die Kommunikationsdaten über den Datenausgang (27) auszugeben,
ein dielektrisches Teil (19), das ein dielektrisches Material aufweist, **dadurch gekennzeichnet, dass** das dielektrische Teil (19) in einer Öffnung (16) der Wand (14) des Gehäuses (13) angeordnet ist, wobei sich die Öffnung (16) von einer ersten Seite (17) der Wand (14) zu einer gegenüberliegenden zweiten Seite (18) der Wand (14) erstreckt,
ein auf der ersten Seite (17) der Wand (14) bereitgestelltes erstes Verbindungselement (22), ausgebildet zum Anbringen der ersten Verbinderkomponente (20) an der ersten Seite (17) der Wand (14), und
- ein auf der zweiten Seite (18) der Wand (14) bereitgestelltes zweites Verbindungselement (23), ausgebildet zum Anbringen der zweiten Verbinderkomponente (21) an der zweiten Seite (18) der Wand (14),
wobei das dielektrische Teil (19) durch Schmelzschweißen innerhalb der Öffnung (16) angebracht ist oder
die Öffnung (16) ein Innengewinde aufweist und das dielektrische Teil (19) ein dazu passendes Außengewinde aufweist.

2. Datenverbindungsanordnung nach Anspruch 1, wobei das dielektrische Teil (19) angepasst ist, um die Öffnung (16) abzudichten.

3. Datenverbindungsanordnung nach Anspruch 1 oder Anspruch 2, wobei das dielektrische Material mindestens eines von
- Glas,
- dotiertem Glas und
- Kohlenstoff
aufweist.

4. Datenverbindungsanordnung nach einem der vorhergehenden Ansprüche,
wobei das erste Verbindungselement (22) eine erste Aufnahme aufweist und die erste Verbinderkomponente (20) eine zu der ersten Aufnahme passende Befestigungsstruktur zum Anbringen der ersten Verbinderkomponente (20) an der ersten Seite (17) der Wand (14) aufweist, und/oder
wobei das zweite Verbindungselement (23) eine zweite Aufnahme aufweist und die zweite Verbinderkomponente (21) eine zu der zweiten Aufnahme passende Befestigungsstruktur zum Anbringen der zweiten Verbinderkomponente (21) an der zweiten Seite (18) der Wand (14) aufweist.

5. Datenverbindungsanordnung nach einem der vorhergehenden Ansprüche,
wobei eine (20) der ersten und zweiten Verbinderkomponenten (20, 21) einen Leistungseingang (33) und eine Leistungsübertragungsspule (35) aufweist, die für eine induktive Leistungsübertragung der von dem Leistungseingang (33) empfangenen elektrischen Leistung sorgt, und wobei die andere (21) der ersten und zweiten Verbinderkomponenten (20, 21) eine Leistungsübertragungsspule (38) aufweist, die ausgebildet ist, um die induktive Leistungsübertragung zu empfangen und um die Wandlerschaltung (31) der anderen (21) der ersten und zweiten Verbinderkomponenten (20, 21) mit elektrischer Energie zu versorgen.

6. Datenverbindungsanordnung nach einem der vorhergehenden Ansprüche, wobei eine Frequenz des Hochfrequenzsignals in einem Bereich von 3,1 bis 10,6 GHz liegt.

7. Datenverbindungsanordnung nach einem der vorhergehenden Ansprüche, wobei mindestens eine der ersten und zweiten Verbinderkomponenten (20, 21) ein Gehäuse mit einer dem dielektrischen Teil (19) zugewandte Oberfläche (24, 25) aufweist, wobei die Oberfläche (24, 25) dasselbe dielektrische Material wie das dielektrische Teil (19) aufweist.

8. Datenverbindungsanordnung nach einem der vorhergehenden Ansprüche, wobei mindestens einer des Dateneingangs (26) und des Datenausgangs (27) mindestens eines von
- einem Ethernet-Anschluss,
- einem faseroptischen Anschluss,
- einem digitalen elektrischen Anschluss und
- einem analogen elektrischen Anschluss
aufweist.

9. Datenverbindungsanordnung nach einem der vorhergehenden Ansprüche, wobei mindestens eine der ersten und zweiten Verbinderkomponenten (20, 21) ein Gehäuse aufweist, das ein Metallmaterial aufweist.

10. Datenverbindungsanordnung nach einem der vorhergehenden Ansprüche, wobei das dielektrische Teil (19) eine Wellenleiterstruktur aufweist.

11. Einrichtung, die Folgendes umfasst:
- ein abgedichtetes Gehäuse (13) zur Aufnahme von Komponenten (11) der Einrichtung (10) und
- die Datenverbindungsanordnung (15) nach einem der vorhergehenden Ansprüche, angebracht an einer Wand (14) des abgedichteten Gehäuses (13).

12. Einrichtung nach Anspruch 11, wobei die Einrichtung (10) eine wasserdichte unterseeische Einrichtung umfasst.

## Revendications

1. Ensemble de connexion de données pour assurer une transmission de données de communication au travers d'une paroi (14) d'un boîtier (13) d'un dispositif (10), l'ensemble de connexion de données (15) comprenant :
- un premier composant de connecteur (20) qui comprend un premier agencement d'antenne (30), une entrée de données (26) et un circuit de convertisseur (29), le circuit de convertisseur (29) du premier composant de connecteur (20) étant configuré pour recevoir les données de communication via l'entrée de données (26), pour générer un signal radiofréquence qui comprend les données de communication reçues et pour émettre en sortie le signal radiofréquence via le premier agencement d'antenne (30) ;
- un second composant de connecteur (21) qui comprend un second agencement d'antenne (32), une sortie de données (27) et un circuit de convertisseur (31), le circuit de convertisseur (31) du second composant de connecteur (21) étant configuré pour recevoir, via le second agencement d'antenne (32), le signal radiofréquence qui est envoyé depuis le premier agencement d'antenne (30), pour extraire les données de communication à partir du signal radiofréquence reçu et pour émettre en sortie les données de communication via la sortie de données (27) ;
- une partie diélectrique (19) qui comprend un matériau diélectrique, **caractérisé en ce que** la partie diélectrique (19) est agencée dans une ouverture (16) de la paroi (14) du boîtier (13), l'ouverture (16) s'étendant depuis un premier côté (17) de la paroi (14) jusqu'à un second côté opposé (18) de la paroi (14) ;
- un premier élément de connexion (22) qui est prévu sur le premier côté (17) de la paroi (14) et qui est configuré pour monter le premier composant de connecteur (20) au niveau du premier côté (17) de la paroi (14) ; et
- un second élément de connexion (23) qui est prévu sur le second côté (18) de la paroi (14) et qui est configuré pour monter le second composant de connecteur (21) au niveau du second côté (18) de la paroi (14) ; dans lequel :
la partie diélectrique (19) est montée à l'intérieur de l'ouverture (16) via un soudage par fusion ou l'ouverture (16) comprend un filetage interne et la partie diélectrique (19) comprend un filetage externe correspondant.

2. Ensemble de connexion de données selon la revendication 1, dans lequel la partie diélectrique (19) est adaptée pour sceller l'ouverture (16).

3. Ensemble de connexion de données selon la revendication 1 ou la revendication 2, dans lequel le matériau diélectrique comprend au moins un matériau pris parmi :
- du verre ;
- du verre dopé ; et
- du carbone.

4. Ensemble de connexion de données selon l'une quelconque des revendications précédentes, dans lequel :
le premier élément de connexion (22) comprend un premier réceptacle, et le premier composant de connecteur (20) comprend une structure de montage qui correspond au premier réceptacle pour monter le premier composant de connecteur (20) au niveau du premier côté (17) de la paroi (14) ; et/ou dans lequel :
le second élément de connexion (23) comprend un second réceptacle, et le second composant de connecteur (21) comprend une structure de montage qui correspond au second réceptacle pour monter le second composant de connecteur (21) au niveau du second côté (18) de la paroi (14).

5. Ensemble de connexion de données selon l'une quelconque des revendications précédentes, dans lequel l'un (20) des premier et second composants de connecteur (20, 21) comprend une entrée d'énergie (33) et une bobine de transmission d'énergie (35) qui assure une transmission d'énergie par induction de l'énergie électrique qui est reçue depuis l'entrée d'énergie (33), et dans lequel l'autre (21) des premier et second composants de connecteur (20, 21) comprend une bobine de transmission d'énergie (38) configurée pour recevoir la transmission par induction de l'énergie et pour fournir de l'énergie électrique au circuit de convertisseur (31) de l'autre (21) des premier et second composants de connecteur (20, 21).

6. Ensemble de connexion de données selon l'une quelconque des revendications précédentes, dans lequel une fréquence du signal radiofréquence est dans une plage de 3,1 - 10,6 GHz.

7. Ensemble de connexion de données selon l'une quelconque des revendications précédentes, dans lequel au moins l'un des premier et second composants de connecteur (20, 21) comprend un boîtier qui inclut une surface (24, 25) qui fait face à la partie diélectrique (19), dans lequel la surface (24, 25) comprend le même matériau diélectrique que la partie diélectrique (19).

8. Ensemble de connexion de données selon l'une quelconque des revendications précédentes, dans lequel au moins l'une de l'entrée de données (26) et de la sortie de données (27) comprend au moins un port pris parmi :
- un port Ethernet ;
- un port de fibre optique ;
- un port électrique numérique ; et
- un port électrique analogique.

9. Ensemble de connexion de données selon l'une quelconque des revendications précédentes, dans lequel au moins l'un des premier et second composants de connecteur (20, 21) comprend un boîtier qui comprend un matériau métallique.

10. Ensemble de connexion de données selon l'une quelconque des revendications précédentes, dans lequel la partie diélectrique (19) comprend une structure de guide d'ondes.

11. Dispositif comprenant :
- un boîtier scellé (13) pour loger des composants (11) du dispositif (10) ; et
- l'ensemble de connexion de données (15) selon l'une quelconque des revendications précédentes qui est agencé au niveau d'une paroi (14) du boîtier scellé (13).

12. Dispositif selon la revendication 11, dans lequel le dispositif (10) constitue un dispositif sous-marin étanche à l'eau.
